Europäisches Patentamt

European Patent Office

Office européen des brevets

(19)

(11) EP 0 690 328 B1

(12) FASCICULE DE BREVET EUROPEEN

(45) Date de publication et mention
de la délivrance du brevet:
**03.01.2001 Bulletin 2001/01**

(51) Int Cl.$^7$: **G02B 13/14**, G02B 15/00

(21) Numéro de dépôt: **95401525.1**

(22) Date de dépôt: **27.06.1995**

(54) **Procédé d'athermalisation de caméra thermique à balayage et combinaison optique de mise en oeuvre**

Verfahren und Vorrichtung zur Athermalisation einer Wärmebildkamera mit Abtastung

Method and device for athermalization of scanning thermic camera

(84) Etats contractants désignés:
**DE GB IT**

(30) Priorité: **01.07.1994 FR 9408159**

(43) Date de publication de la demande:
**03.01.1996 Bulletin 1996/01**

(73) Titulaire: **THOMSON-CSF**
**75008 Paris (FR)**

(72) Inventeurs:
• **Antier, Catherine**
**F-92402 Courbevoie Cedex (FR)**
• **Gonnaud, Isabelle**
**F-92402 Courbevoie Cedex (FR)**
• **Rabault, Denis**
**F-92402 Courbevoie Cedex (FR)**
• **Rollin, Joel**
**F-92402 Courbevoie Cedex (FR)**

(74) Mandataire: **Lincot, Georges**
**Thomson-CSF Propriété Intellectuelle,**
**Département Brevets,**
**13, Avenue du Président Salvador Allende**
**94117 Arcueil Cédex (FR)**

(56) Documents cités:
**US-A- 5 548 439**

• **CRITICAL REVIEW OF OPTICAL SCIENCE &TECHNOLOGY, vol.38 pages 69 - 94 P.J.ROGERS 'ATHERMALIZATION OF IR OPTICAL SYSTEMS'**
• **PROCEEDINGS SPIE: OPTICAL SYSTEM DESIGN,ANALYSIS, AND PRODUCTION FOR ADVANCED TECHNOLOGY SYSTEMS, vol.655, 1986 pages 142 - 153 V.POVEY 'ATHERMALISATION TECHNIQUES IN INFRA RED SYSTEMS'**
• **APPLIED OPTICS., vol.32, no.14, 10 Mai 1993, NEW YORK US pages 2483 - 2489 G.P.BEHRMANN ET AL. 'INFLUENCE OF TEMPERATURE ON DIFFRACTIVE LENS PERFORMANCE'**
• **OPTICAL ENGINEERING, vol.33, no.1, Janvier 1994, BELLINGHAM US pages 109 - 115 A.MANN 'INFRARED ZOOM LENSES IN THE 1990s'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne l'imagerie thermique dans les bandes de transmission infrarouge de l'atmosphère, classiquement 8 à 12 μm ou 3 à 5 μm. Elle vise à supprimer les dégradations de l'image résultant des variations de température dans la combinaison optique des caméras thermiques à balayage.

Une caméra thermique utilise comme détecteur une mosaïque comprenant un nombre réduit d'éléments photosensibles et, pour couvrir un champ objet donné, sa combinaison optique comprend des moyens de balayage bidimensionnel, classiquement à base de miroirs oscillants, et des éléments réfractifs qui focalisent le flux thermique sur le détecteur.

Le problème résulte du fait que les caractéristiques des lentilles (indice de réfraction, rayon de courbure, épaisseur) constituant la combinaison optique de la caméra évoluent sensiblement avec la température. La solution consiste classiquement à translater une lentille (ou un groupe optique) de la combinaison, pour conserver la focalisation du flux sur le détecteur. La lentille est rendue mobile à l'aide d'une motorisation asservie.

Les inconvénients de coût et d'encombrement qui en résultent ont conduit à développer de nombreuses méthodes d'athermalisation passive pour supprimer cette motorisation. L'article de P.J.Roberts, intitulé "athermalization of infrared optics : a review" , SPIE vol. 1049 pages 72 à 81 (1989) et l'article de Allen Mann intitulé "Infrared zoom lenses in the 1990s", Optical Engineering, Vol. 33, pages 109 à 115 (1994), dressent des catalogues des principales solutions mises en oeuvre, à savoir :

- l'utilisation de systèmes catadioptriques ; dans l'infrarouge, dès lors que le germanium est utilisé, une grande partie des défocalisations thermiques d'un système est apportée par les changements d'indice de réfraction des matériaux : le remplacement des lentilles de fortes puissances par des miroirs minimise alors les défocalisations thermiques; cependant ces solutions catadioptriques ne fournissent pas une réponse adaptée car elles nécessitent généralement une occultation centrale, ce qui entraîne une perte de flux utile et une réduction de champ;
- l'utilisation d'une combinaison de différents matériaux pour les composants réfractifs, permet de supprimer les défocalisations en température en réalisant une athermalisation optique passive, mais nécessite au moins trois matériaux différents (par exemple Ge, ZnSe, AsGa);
- lorsque la combinaison optique le permet, la motorisation de la lentille mobile peut être remplacée par une athermalisation mécanique passive : cette lentille est alors portée par un système approprié de cales dilatables avec la température; mais cette solution n'est envisageable que dans le cas où les mouvements sont faibles, typiquement de l'ordre de 300 μm sur une amplitude thermique de 80°C : il est donc nécessaire de combiner cette solution avec celle d'un autre type , par exemple avec la précédente.

D'autre part, l'emploi d'optiques hybrides à des fins d'athermalisation passive est également connue, par exemple d'un autre article de P.J. Rogers , intitulé "athermalization of IR optical systems" et publié dans la revue "critical review of optical Science & Technology", vol. CR 38. Dans ces systèmes optiques athermalisés passivement, dits "autoathermalisés", l'adjonction d'un réseau sur une lentille permet, par correction du chromatisme (appelée achromatisation), d'utiliser seulement deux matériaux au lieu de trois tout en éliminant les défocalisations thermiques.

Ces solutions ne sont adaptables que pour chacun des modules optiques, pris isolément, d'une combinaison optique de caméra à balayage. En effet, une telle caméra comporte nécessairement plusieurs modules optiques (au moins un groupe optique de tête, un module de balayage et un groupe optique de collimation) et les méthodes évoquées ne s'appliquent qu'à un même module optique. En effet, il est nécessaire d'effectuer une athermalisation module par module car la caméra n'est pas à température homogène.

La solution proposée par la présente invention exploite, elle, la présence d'une architecture optique à plusieurs degrés de liberté pour autoathermaliser la combinaison optique, par découplage spatial de la correction du chromatisme et des compensations des dérives thermiques. En d'autres termes, le chromatisme de la combinaison optique est corrigé globalement et l'athermalisation est réalisée module par module.

Plus précisément, l'invention a pour objet un procédé de fabrication d'une caméra thermique athermalisée et achromatisée comprenant les étapes suivantes :

- disposer un groupe afocal, un module de balayage, une optique de focalisation et un détecteur en série et une lentille diffractive entre le module de balayage et le détecteur, séparé du groupe afocal dans un agencement mutuel approprié pour la focalisation d'un rayonnement thermique sur le détecteur,
- optimiser séparément l'athermalisation du groupe afocal et celle de l'optique de focalisation, en se libérant de la contrainte d'achromatisation de ces parties optiques,
- ajuster le chromatisme au moyen de la lentille diffractive.

La solution proposée présente l'avantage de simplifier la combinaison optique en se libérant de la contrainte d'achromatisation du groupe afocal frontal. Cette libération peut être mise à profit pour permettre à la lentille de tête du groupe afocal frontal de servir de hublot d'entrée de qualité, le choix de son matériau n'étant alors plus dicté que par cette utilisation.

D'autre part, l'achromatisation étant effectuée dans une portion d'espace où le champ est très réduit, les problèmes de chromatisme latéral qui surviennent avec les solutions antérieures sont éliminés.

Selon des modes de réalisation particuliers, le chromatisme de la combinaison optique est corrigé à l'aide de la présence d'un réseau diffractif disposé soit sur le profil asphérique d'une lentille de collimation constituant l'optique de collimation, soit sur une lame de puissance optique nulle, cette lame pouvant coïncider avec le hublot du cryostat du détecteur infrarouge ou avec la fenêtre de fermeture du module de balayage.

La solution présentée permet également de rendre indépendamment interchangeables le groupe frontal et l'optique de collimation: selon une caractéristique particulière, le groupe frontal et la lentille de collimation sont corrigés des aberrations optiques (aberration sphérique et de champ) et sont testés par interférométrie en lumière monochromatique, indépendamment l'un de l'autre. Les caractéristiques optiques de ces groupes peuvent ainsi être définies indépendamment, si bien qu'ils sont testables et interchangeables séparément.

D'autres caractéristiques et avantages apparaîtront à la lecture de la description qui suit, en se référant aux figures annexées qui représentent respectivement :

- les figures 1 et 2, deux exemples de structure de caméras thermiques classiques;
- la figure 3, un groupe optique afocal frontal à 3 lentilles d'une combinaison optique selon l'invention;
- la figure 4, un groupe optique afocal frontal à 4 lentilles d'une combinaison optique selon l'invention;
- la figure 5, un exemple de réalisation de la combinaison optique selon l'invention;
- la figure 6, un exemple de lame d'achromatisation selon l'invention;
- la figure 7, un autre exemple de réalisation de la combinaison optique selon l'invention.

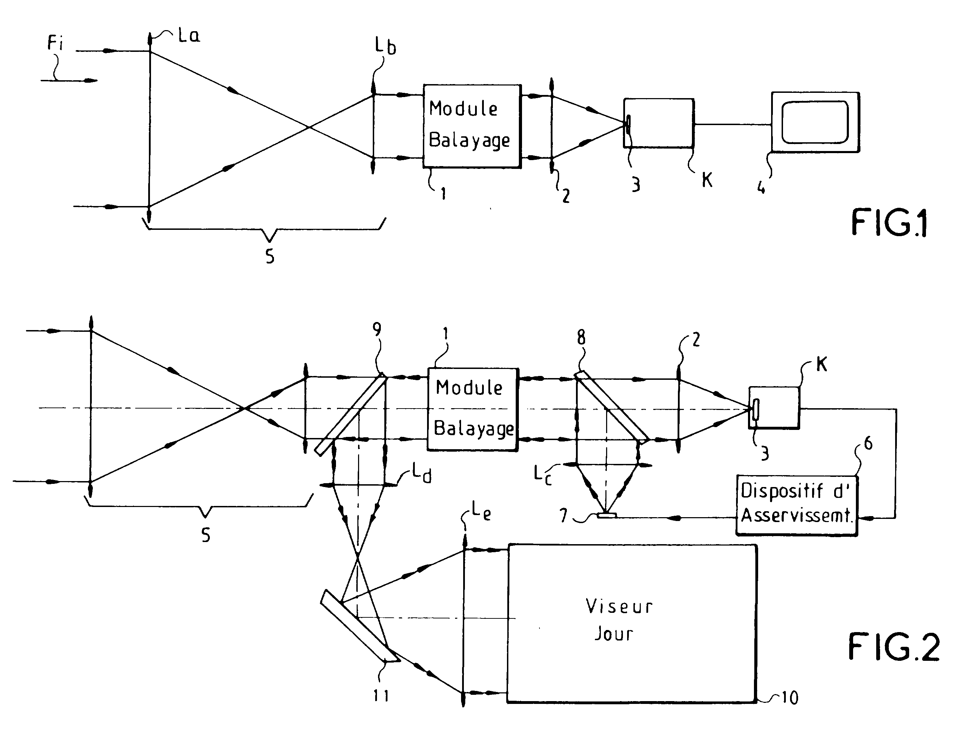

Les figures 1 et 2 illustrent schématiquement en coupe deux exemples de structure de caméra thermique, respectivement à visualisation par moniteur et par diodes électroluminescentes.

Dans le premier exemple, le trajet d'un flux incident infrarouge Fi est représenté par des rayons extrêmes à simple flèche. Le flux Fi, provenant d'une scène à observer, traverse un module de balayage 1 en passant par des fenêtres d'entrée et de sortie, puis est collimaté à travers une optique 2, représenté schématiquement par une lentille mince, avant d'atteindre un détecteur infrarouge 3, disposé dans un cryostat K, qui le convertit en signal électrique d'entrée pour un moniteur de visualisation 4. Des tensions de synchronisation du moniteur sont fournies par des dispositifs de recopie de position (non représentés) des mouvements des miroirs du module de balayage.

Dans une version classique, le module de balayage est constitué de deux miroirs oscillants, dédiés respectivement à l'exploration verticale et horizontale de la scène à analyser. Le double balayage s'effectue généralement en faisceaux parallèles et, pour minimiser la dimension des miroirs, la pupille est relativement petite à l'intérieur de ce module.

Pour augmenter la sensibilité de la caméra, un groupe optique afocal frontal 5, symbolisé par deux lentilles minces $L_a$ et $L_b$, est classiquement disposé en amont du module de balayage 1.

L'architecture infrarouge du second exemple de réalisation obéit aux mêmes principes et les éléments communs aux figures 1 et 2 portent les mêmes signes de référence. La différence réside principalement dans le fait que le signal électrique issu du détecteur 3 pilote, grâce à un dispositif électronique d'asservissement 6, la luminance d'une batterie de diodes électroluminescentes 7 qui fournit un faisceau en lumière visible collimaté par une lentille $L_c$.

Le flux visible emprunte ensuite, mais en sens inverse, le même chemin que le flux infrarouge incident par interposition d'une lame dichroïque inclinée 8 de transmission infrarouge. Le trajet optique du flux de lumière visible provenant des diodes est représenté par des rayons à double flèche. L'interposition d'une seconde lame dichroïque 9, inclinée symétriquement, permet de réfléchir par séparation spectrale la lumière issue des diodes vers un viseur jour 10, par l'intermédiaire d'un groupe afocal visible 11 servant de relais optique et des lentilles de collimation $L_d$ et $L_e$. Classiquement, l'ensemble -afocal frontal, module de balayage, afocal visible- forme une "lunette thermique" de grossissement unité, et le viseur jour est solidaire d'un poste de tir. Le rajout de cette lunette thermique à ce poste de tir étend les capacités de tir à la vision nocturne sans perturber le réglage du viseur jour.

Quel que soit le type de visualisation mis en oeuvre, l'invention vise à réaliser une caméra thermique dont la combinaison optique de base, comportant l'afocal frontal, le module de balayage et l'optique de focalisation, est autoathermalisée sans qu'apparaissent les inconvénients décrits précédemment.

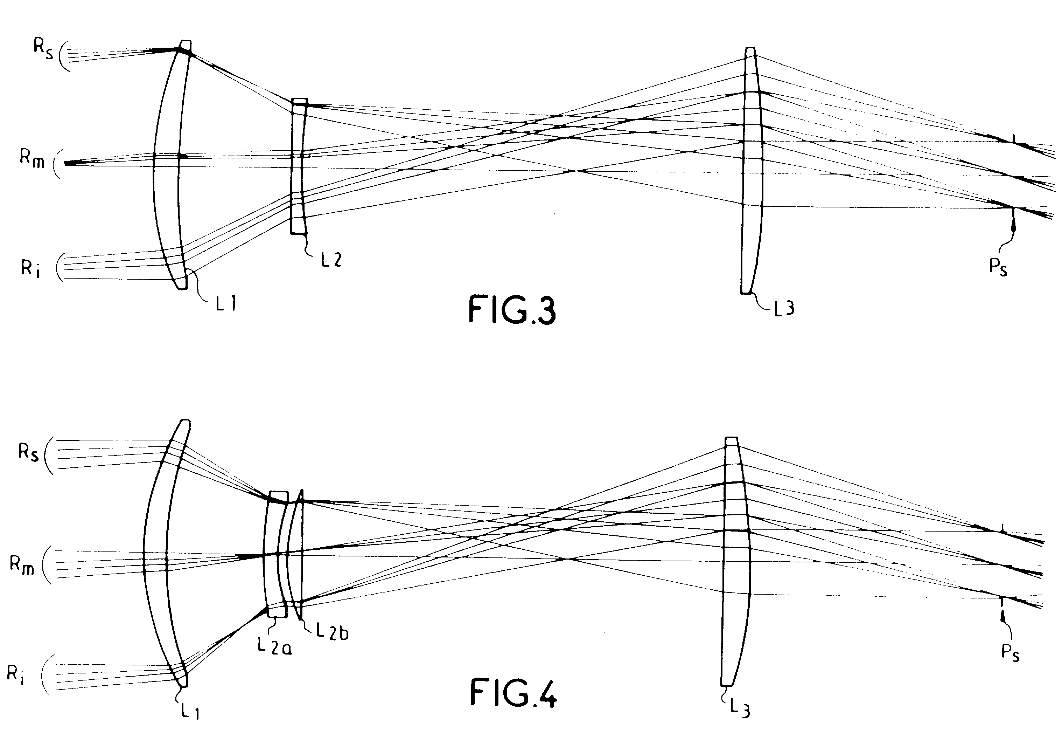

Un groupe optique afocal frontal selon l'invention, est ci-après détaillé en regard de la figure 3. Des trajets optiques du flux incident correspondant à quatre positions de balayage sont représentés par des rayons marginaux supérieurs $R_s$, des rayons moyens $R_m$ et des rayons marginaux inférieurs $R_i$.

Cet afocal comprend, de manière nominale, trois lentilles : une lentille frontale $L_1$, qui fait classiquement office de hublot, une lentille intermédiaire $L_2$ et une lentille arrière $L_3$. $L_1$ et $L_2$ sont, de préférence, de puissances optiques opposées pour former un téléobjectif et rendre ainsi l'ensemble compact. $L_1$ est de puissance positive tandis que $L_2$ est divergente.

Pour minimiser la taille de la lentille $L_1$, la pupille d'entrée est située approximativement sur cette lentille, avec un diamètre de 53,5mm; la pupille de sortie $P_s$ est, elle, rejetée à 60 mm derrière la lentille $L_3$. L'ensemble possède un encombrement de 145mm, avec un grossissement de -3,5.

Selon le procédé de l'invention, chacun des modules de la combinaison optique est autoathermalisé séparément. Le groupe afocal frontal est athermalisé optiquement soit totalement par un choix adapté de la séquence des matériaux des lentilles le constituant (réalisant une "autoathermalisation optique"), soit partiellement, la correction résiduelle étant effectuée par l'utilisation de cales dilatables adaptées.

Ainsi, le groupe afocal frontal ne comporte pas de lentille hybride, alors que, dans la solution classique, l'adjonction d'un réseau sur le profil d'une lentille (en fait, sur la lentille asphérique L3 pour diminuer les coûts) pour corriger le chromatisme axial, peut apporter des dégradations en bordure d'image qui forment un chromatisme, dit chromatisme latéral ou de champ. Ce chromatisme latéral devient d'autant plus inacceptable que la pupille de sortie est éloignée de la lentille arrière, le chromatisme dépendant fortement de la largeur du champ.

Selon l'invention, le chromatisme axial de l'afocal frontal est corrigé hors du groupe frontal, préférentiellement entre le module de balayage et le détecteur, c'est-à-dire dans un espace où le champ optique est extrêmement réduit. Il est ainsi possible de s'affranchir des problèmes de chromatisme latéral qui entachent la qualité de l'image dans le champ.

Dans un premier exemple de réalisation d'une combinaison optique selon l'invention fonctionnant en bande 8-12 µm, le groupe optique afocal de tête comporte :

- une lentille frontale $L_1$, de puissance positive et constituée en arséniure de gallium (AsGa), matériau suffisamment dur pour servir de hublot de caméra et présentant des défocalisations thermiques réduites (grâce à sa constringence thermique élevée, égale à 16709 K) ;
- une lentille intermédiaire $L_2$, de puissance négative et constituée en germanium (Ge), pour compenser les dérives thermiques de $L_1$ par un matériau évoluant fortement en température (avec une constringence thermique de 7945 K);
- une lentille arrière $L_3$ en Ge.

Une telle solution est compatible d'une autoathermalisation mécanique à base de cales dilatables ayant un coefficient de dilatation thermique de valeur adaptée. Ce type d'athermalisation connu permet d'entraîner, par exemple dans le cas présent, un déplacement de $L_2$ de l'ordre de 170 µm pour une amplitude thermique de 50°C.

Dans un second exemple de réalisation illustré à la figure 4, le groupe afocal frontal est optiquement autoathermalisé, sans système de cales dilatables spécifique, les entretoises étant en matériau standard (par exemple en aluminium). L'autoathermalisation est obtenue en dédoublant la lentille intermédiaire précédente en deux lentilles, $L_{2a}$ et $L_{2b}$, présentant des puissances optiques et des variations en température fortes mais de signes opposés. La lentille $L_{2a}$ est par exemple de puissance négative à faible constringence thermique positive, tandis que $L_{2b}$ est positive à faible constringence thermique négative. L'ensemble $L_{2a}$-$L_{2b}$ présente alors des défocalisations thermiques amplifiées de signe contraire à celles créées par $L_1$ et $L_3$ de puissance positive. L'ensemble $L_{2a}$-$L_{2b}$ compense donc les défauts thermiques de $L_1$ et de $L_3$.

Pour obtenir de telles variations thermiques, les lentilles intermédiaires sont en matériaux présentant un indice de réfraction n de gradient thermique dn/dT élevé, et des constringences thermiques de signes opposés. Rappelons que la constringence thermique d'un matériau d'indice n pour une longueur d'onde donnée dans une bande de transmission spectrale donnée (par exemple 8 à 12 µm), d'indice moyen n* dans cette bande et de coefficient de dilatation thermique $\alpha$, s'écrit :

$$\eta = \frac{1}{\frac{1}{(n^*-1)} \times \frac{dn}{dT} - \alpha}$$

Rappelons également que la défocalisation thermique est d'autant plus importante que la constringence thermique est faible. Plus précisément, la défocalisation $\Delta f$ pour une variation thermique $\Delta T$ s'écrit, pour une distance focale f :

$$\Delta f = \frac{f}{\eta} \times \Delta T$$

Dans cet exemple de réalisation, la lentille $L_{2a}$, de puissance fortement négative est en germanium, de constringence thermique positive; la lentille $L_{2b}$, de puissance fortement positive, est taillée dans du KrS5, cristal de bromoiodure de thallium connu de l'homme de l'art et présentant une constringence thermique négative (égale à -4361 K).

Les matériaux de $L_{2a}$ et de $L_{2b}$ sont ainsi choisis pour que les dérives thermiques de ces lentilles intermédiaires compensent les dérives thermiques des lentilles frontale et arrière, $L_1$ et $L_3$, réalisées en germanium.

Quel que soit le mode de réalisation, le groupe afocal de tête est corrigé des aberrations de champ par l'adjonction d'un profil asphérique sur la lentille $L_3$. La définition des corrections du groupe afocal peut être déterminée par des moyens interférométriques classiques en lumière monochromatique. Le test du groupe afocal pouvant être entrepris indépendamment, le groupe optique de tête est dans ces conditions interchangeable.

Cependant, le groupe afocal de tête n'est pas corrigé du chromatisme : selon le procédé de l'invention cette correction est réalisée par un profil diffractif derrière le groupe de tête, soit dans la partie arrière de la combinaison optique et plus précisément entre le module de balayage et le détecteur.

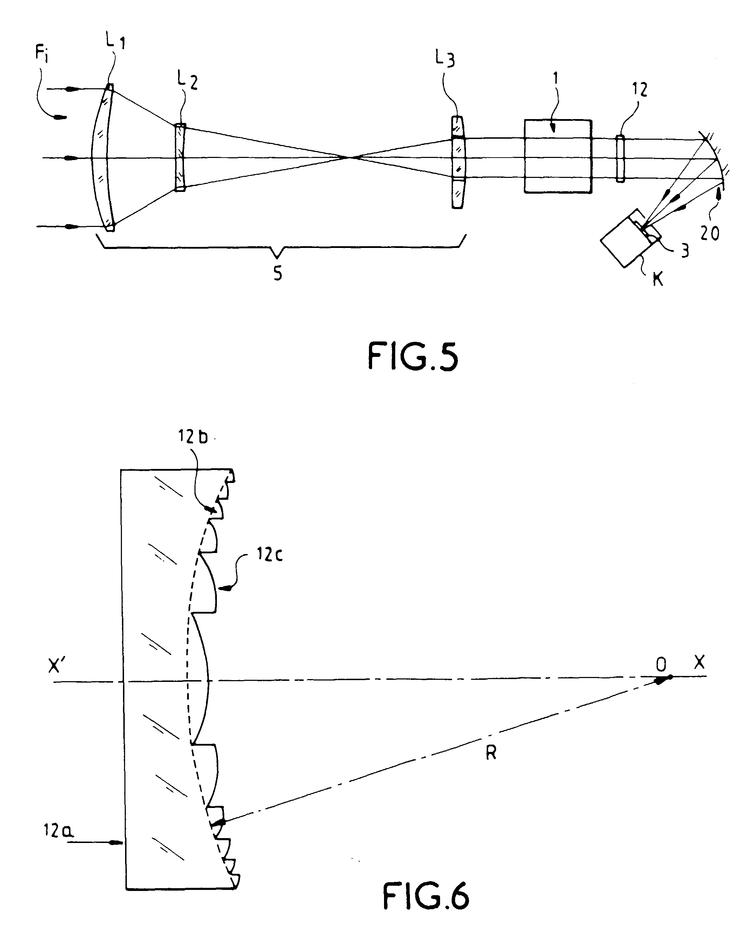

La figure 5 illustre un premier exemple de réalisation d'une combinaison optique selon l'invention. Dans cette combinaison, le groupe frontal 5 est constitué par l'un des exemples d'afocaux déjà décrits et illustrés aux figures 3 et 4, le groupe à trois lentilles ayant été représenté. Les signes de référence correspondants aux mêmes éléments que ceux de la figure 1 sont conservés.

Pour athermaliser la partie arrière de la combinaison, il est prévu d'utiliser comme optique de focalisation 2 un système catadioptrique à miroir, par exemple un miroir parabolique hors d'axe 20.

Pour compenser le chromatisme du groupe frontal 5 il est prévu, entre le module de balayage 1 et le détecteur 3, une lame 12 pourvue d'un réseau de diffraction. Le balayage étant effectué en amont, l'optique diffractive 12 est située dans un espace où la largeur du champ optique est extrêmement réduite, si bien que la correction du chromatisme reste identique pour tous les points du champ de la caméra.

Cette lame de compensation présente avantageusement une puissance optique nulle pour minimiser les défocalisations thermiques propres à cet élément, pour ne pas perturber les conjugaisons optiques de la version nominale, et pour que n'apparaissent pas d'aberrations.

Un exemple de réalisation d'une telle lame est présenté à la figure 6. Elle comporte, en se plaçant dans le sens du flux incident, une face avant plane 12a et une face arrière 12b sur laquelle est gravée, par exemple au tour diamant un réseau 12c. Ce réseau s'appuie sur une surface sphérique de révolution autour de l'axe géométrique X'X de l'élément 12, centrée en O et de rayon de courbure R adapté de sorte que la puissance optique résultante soit nulle.

Pour ce faire, si n est l'indice de réfraction de la lame et $f_D$ la distance focale de la partie diffractive, calculée pour compenser le chromatisme de la combinaison optique, la relation suivante est à respecter :

$$\frac{n-1}{R} = \frac{1}{f_D}$$

Pour que la défocalisation thermique provoquée par la présence de la lame reste négligeable, la constringence thermique du matériau la constituant et celle propre au réseau sont avantageusement aussi proches que possible, et le matériau présente une dérive thermique aussi faible que possible.

A titre d'exemple, avec un groupe frontal mécaniquement autoathermalisé (tel que le groupe précédemment décrit, à 3 lentilles en "AsGa-Ge-Ge") , la distance focale de la partie diffractive $f_D$ vaut approximativement 190 mm et le matériau est le ZnSe

Pour éviter qu'apparaissent les problèmes d'image parasites, la lame est avantageusement inclinée d'un angle supérieur au demi-champ de vue de la mosaïque détectrice qui est très faible dans cet espace.

Une telle lame peut être utilisée en hublot de scellement du module de balayage 1 ou coïncider avec le hublot du cryostat du détecteur infrarouge 3. Dans la version "lunette thermique" illustrée à la figure 2, le réseau peut être porté par la face arrière de la lame dichroïque 8 car cette face n'opère pas sur le trajet du flux de rayonnement visible.

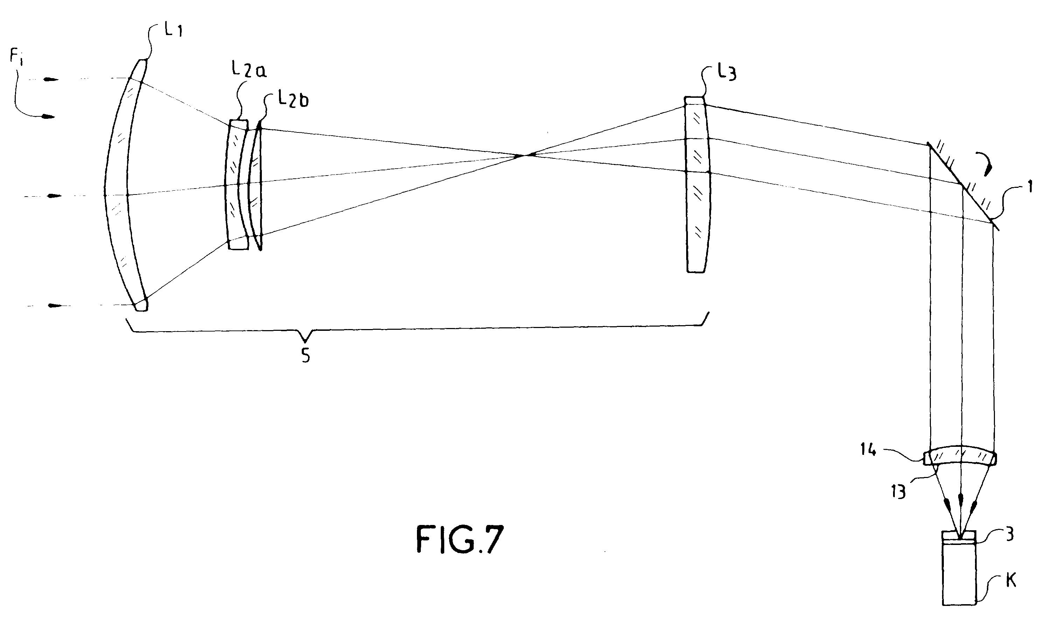

Une autre solution d'autoathermalisation de la partie arrière de la combinaison optique peut être d'utiliser, comme optique de focalisation, une lentille simple hybride. Un exemple de réalisation de la combinaison optique avec, comme groupe afocal frontal, un groupe à 4 lentilles et, comme optique de collimation, une lentille hybride, est présenté schématiquement à la figure 7. Dans cet exemple, un profil 13 de cette lentille 14 est ainsi pourvu d'un réseau pour corriger le chromatisme de l'afocal frontal et de celui propre à la lentille de focalisation.

Le matériau de cette lentille 14 est choisi pour que son indice varie peu en température. Un matériau particulièrement indiqué pour cette lentille est le séléniure de zinc (ZnSe): il est thermiquement peu sensible (constringence thermique de 29828 K) et présente un indice de réfraction suffisamment faible (variant de 2,4173 à 2,393 pour des longueurs d'onde variant de 8 à 12 μm) pour justifier la présence d'un profil asphérique de correction des aberrations sphériques. Dans ces conditions, ce matériau présente les avantages de permettre l'usinage du réseau en même temps que le profil asphérique, sur machine de type à diamant, et de compenser les faibles défocalisations thermiques propres à la lentille de focalisation uniquement à l'aide de cales dilatables adaptées.

**Revendications**

1. Procédé de fabrication d'une caméra thermique athermalisée et achromatisée comprenant les étapes suivantes :

   - disposer un groupe afocal (5), un module de balayage (1), une optique de focalisation (2) et un détecteur (3) en série et une lentille diffractive (12) entre le module de balayage (1) et le détecteur (3), séparé du groupe afocal, dans un agencement mutuel approprié pour la focalisation d'un rayonnement thermique sur le détecteur,

   - optimiser séparément l'athermalisation du groupe afocal (5) et celle de l'optique de focalisation (2), en se libérant de la contrainte d'achromatisation de ces parties optiques,

- ajuster le chromatisme au moyen de la lentille diffractive (12).

2. Procédé de fabrication d'une caméra thermique selon la revendication 1, caractérisé en ce qu'il comprend des étapes de correction des aberrations optiques autres que le chromatisme, indépendantes pour le groupe afocal et l'optique de focalisation.

3. Procédé de fabrication d'une caméra thermique selon la revendication 2, caractérisé en ce que les étapes de correction sont réalisées par test interférométrique en lumière monochromatique.

4. Procédé de fabrication d'une caméra thermique selon l'une des revendications 1 à 3, caractérisé en ce que l'optique de focalisation comprend un miroir (20) et en ce que la lentille diffractive (12) comprend un réseau de diffraction (12 c) disposé sur une lame de puissance optique nulle.

5. Procédé de fabrication d'une caméra thermique selon la revendication 4, le détecteur (3) étant disposé dans un cryostat fermé par un hublot, caractérisé en ce que la lentille diffractive (12) de puissance optique nulle est située sur ledit hublot.

6. Procédé de fabrication d'une caméra thermique selon la revendication 4, caractérisé en ce que le module de balayage (1) étant pourvu de fenêtres d'ouverture et de fermeture, la lame de puissance optique nulle est située sur ladite fenêtre de fermeture.

7. Procédé de fabrication d'une caméra selon l'une des revendications 1 ou 2 caractérisé en ce que l'optique de focalisation comprend une lentille présentant un profil asphérique (13) et en ce que le la lame diffractive (12) comprend un réseau diffractif disposé sur le profil asphérique.

8. Procédé de fabrication d'une caméra selon la revendication 7, caractérisée en ce que la lentille de l'optique de focalisation (14) est en séléniure de zinc.

9. Procédé de fabrication d'une caméra selon l'une des revendications précédentes, caractérisé en ce que le groupe afocal comporte une lentille de tête ($L_1$) en arséniure de gallium, couplée à une lentille intermédiaire ($L_2$) en germanium, et une lentille arrière ($L_3$) en germanium, l'autoathermalisation du groupe afocal frontal étant réalisé optiquement et mécaniquement par cales dilatables.

10. Procédé de fabrication d'une caméra selon l'une des revendications 1 à 9, caractérisé en ce que le groupe afocal comporte une lentille de tête ($L_1$), deux lentilles intermédiaires ($L_{2a}$, $L_{2b}$) présentant des puissances optiques et des dérives thermiques fortes et de signes opposés, et une lentille arrière ($L_3$), les matériaux des lentilles étant choisis de sorte que les dérives thermiques des lentilles frontale et arrière ($L_1$, $L_3$) soient compensées par celles des lentilles intermédiaires ($L_{2a}$, $L_{2b}$).

11. Procédé de fabrication selon la revendication 10, caractérisé en ce que la lentille de tête (L1), la lentille arrière (L3) et l'une des lentilles intermédiaires divergente (L2a) sont en germanium, et en ce que l'autre lentille intermédiaire convergente (L2b) est en KrS5.

**Patentansprüche**

1. Verfahren zur Herstellung einer athermalisierten und farbfehlerfreien Wärmebildkamera, das folgende Schritte enthält:

- eine afokale Gruppe (5), ein Abtastmodul (1), eine Fokussieroptik (2) und ein Detektor (3) werden hintereinander angeordnet und eine brechende Linse (12) wird zwischen dem Abtastmodul (1) und dem Detektor (3) getrennt von der afokalen Gruppe angeordnet, und zwar in einer solchen gegenseitigen Zuordnung, die für die Fokussierung einer Wärmestrahlung auf den Detektor geeignet ist;
- die Athermalisierung der afokalen Gruppe (5) und die der Fokussieroptik (2) werden getrennt optimiert, wodurch der Zwang zur Achromatisierung dieser optischen Organe beseitigt wird;
- das chromatische Verhalten wird mithilfe der brechenden Linse (12) justiert.

2. Verfahren zur Herstellung einer Wärmebildkamera nach Anspruch 1, dadurch gekennzeichnet, daß es Schritte zur Korrektur der anderen als der chromatischen Verzerrungen aufweist, die unabhängig voneinander für die afokale Gruppe und die Fokussieroptik durchgeführt werden.

3. Verfahren zur Herstellung einer Wärmebildkamera nach Anspruch 2, dadurch gekennzeichnet, daß die Korrekturschritte mittels eines interferometrischen Tests in monochromatischem Licht durchgeführt werden.

4. Verfahren zur Herstellung einer Wärmebildkamera nach einem der Ansprüche 1 bis 3, dadurch gekennzeichnet, daß die Fokussieroptik einen Spiegel (20) enthält und daß die brechende Linse (12) ein Beugungsgitter ($12_c$) enthält, das auf ein Plättchen mit der optischen Brechkraft null aufgebracht wird.

5. Verfahren zur Herstellung einer Wärmebildkamera nach Anspruch 4, in der der Detektor (3) in einem mit einem Fenster verschlossenen Kryostaten untergebracht ist, dadurch gekennzeichnet, daß die brechende Linse (12) mit der optischen Brechkraft null auf dieses Fenster aufgebracht wird.

6. Verfahren zur Herstellung einer Wärmebildkamera nach Anspruch 4, dadurch gekennzeichnet, daß der Abtastmodul (1) mit Öffnungs- und Verschlußfenstern versehen ist und das Plättchen mit der optischen Brechkraft null auf das Verschlußfenster aufgebracht wird.

7. Verfahren zur Herstellung einer Kamera nach einem der Ansprüche 1 und 2, dadurch gekennzeichnet, daß die Fokussieroptik eine Linse (13) mit einem asphärischen Profil enthält und daß das brechende Plättchen (12) ein Beugungsgitter auf dem aspärischen Profil besitzt.

8. Verfahren zur Herstellung einer Kamera nach Anspruch 7, dadurch gekennzeichnet, daß die optische Fokussierlinse (14) aus Zinkselenid ist.

9. Verfahren zur Herstellung einer Kamera nach einem der vorstehenden Ansprüche, dadurch gekennzeichnet, daß die afokale Gruppe eine Linse ($L_1$) aus Galliumarsenid am Kopf, die mit einer Zwischenlinse ($L_2$) aus Germanium gekoppelt ist, und eine hintere Linse ($L_3$) aus Germanium besitzt, wobei die Auto-Athermalisierung der vorderen afokalen Gruppe optisch und mechanisch durch expandierbare Unterlegblöcke erfolgt.

10. Verfahren zur Herstellung einer Kamera nach einem der Ansprüche 1 bis 9, dadurch gekennzeichnet, daß die afokale Gruppe eine Linse ($L_1$) am Kopf, zwei Zwischenlinsen ($L_{2a}$, $L_{2b}$), deren jeweilige optische Brechkraft und deren temperaturbedingter Drift stark sind und entgegengesetzte Vorzeichen besitzen, und eine hintere Linse ($L_3$) enthält, wobei die Materialien der Linsen so gewählt sind, daß der temperaturbedingte Drift der vorderen und der hinteren Linse ($L_1$, $L_3$) durch den der Zwischenlinsen ($L_{2a}$, $L_{2b}$) kompensiert wird.

11. Verfahren zur Herstellung einer Kamera nach Anspruch 10, dadurch gekennzeichnet, daß die Linse am Kopf ($L_1$), die hintere Linse ($L_3$) und eine der Zwischenlinsen ($L_{2a}$), die eine Streulinse ist, aus Germanium sind, während die andere Zwischenlinse ($L_{2b}$), die eine Sammellinse ist, aus KrS5 ist.

**Claims**

1. Method for producing an athermalised and achromatised thermal camera, comprising the following steps:

   - arranging an afocal unit (5), a scanning module (1), a focusing lens system (2) and a detector (3) in series and a diffractive lens (12) between the scanning module (1) and the detector (3), separate from the afocal unit, in a suitable mutual configuration for focusing thermal radiation onto the detector,

   - separately optimising the athermalisation of the afocal unit (5) and that of the focusing lens system (2), doing away with the constraint of achromatisation of these two optical sections,

   - adjusting the chromatics by means of the diffractive lens (12).

2. Method for producing a thermal camera according to claim 1, characterised in that it includes steps of correcting optical aberrations other than the chromatics, which steps are independent in respect of the afocal unit and the focusing lens system.

3. Method for producing a thermal camera according to claim 2, characterised in that the correction steps are realised by interferometric testing in monochromatic light.

4. Method for producing a thermal camera according to any of claims 1 to 3, characterised in that the focusing lens system comprises a mirror (20) and in that the diffractive lens (12) comprises a diffraction grid (12c) arranged on a plate with zero refractive power.

5. Method for producing a thermal camera according to claim 4, characterised in that the detector (3) being arranged in a cryostatic temperature regulator closed by a hatch, the diffractive lens (12) with zero refractive power is situated on said hatch.

6. Method for producing a thermal camera according to claim 4, characterised in that the scanning module (1) being provided with opening and closing windows, the plate with zero refractive power is situated on said closing window.

7. Method for producing a camera according to either of claims 1 and 2, characterised in that the focusing lens system comprises a lens with an aspherical profile (13) and in that the diffractive plate (12) comprises a diffractive grid disposed on the aspherical profile.

**8.** Method for producing a camera according to claim 7, characterised in that the lens of the focusing lens system (14) is made of zinc selenide.

**9.** Method for producing a camera according to any of the preceding claims, characterised in that the afocal unit has a gallium arsenide head lens ($L_1$) coupled with a germanium intermediate lens ($L_2$) and a germanium rear lens ($L_3$), the self-athermalisation of the frontal afocal unit being realised optically and mechanically via dilatable shims.

**10.** Method for producing a camera according to any of claims 1 to 9, characterised in that the afocal unit has a head lens ($L_1$), two intermediate lenses ($L_{2a}$, $L_{2b}$) having refractive powers and thermal derivatives that are strong and of opposite signs, and a rear lens ($L_3$), the materials of the lenses being chosen so that the thermal derivatives of the frontal and rear lenses ($L_1$, $L_3$) are compensated by those of the intermediate lenses ($L_{2a}$, $L_{2b}$).

**11.** Method of production according to claim 10, characterised in that the head lens ($L_1$, the rear lens (L3) and one of the divergent intermediate lenses (L2a) are made from germanium, and in that the other focusing intermediate lens (L2b) is made from KrS5.

FIG.1

Fi

La

Lb

Module Balayage 1

2

3 K

4

5

FIG.2

Viseur Jour 10

Le

11

Ld

9

Module Balayage 1

5

2

8

Lc

7

3 K

6 Dispositif d'Asservissemt.

FIG.3

FIG.4

FIG.5

FIG.6

FIG.7